# EUROPÄISCHE PATENTSCHRIFT

(11) **EP 3 859 352 B1**
(45) Veröffentlichungstag und Bekanntmachung des Hinweises auf die Patenterteilung: **01.04.2026**
(21) Anmeldenummer: 20154130.7
(22) Anmeldetag: 28.01.2020
(51) Int. Cl.: G01P 5/24, G01P 13/00, F16K 37/00, G01F 1/66, G01M 3/24, G01M 3/28

(54) **VENTILINSEL MIT EINER VORRICHTUNG ZUR DETEKTION VON GASSTRÖMUNGEN IN EINER MEHRZAHL VON AKUSTISCH GEKOPPELTEN PNEUMATISCHEN KANÄLEN UND VERWENDUNG DERSELBEN**
VALVE TERMINAL WITH A DEVICE FOR DETECTING GAS FLOWS IN A MULTIPLE NUMBER OF ACOUSTICALLY COUPLED PNEUMATIC CHANNELS AND USE THEREOF
ÎLOT À SOUPAPE AVEC UN DISPOSITIF DE DÉTECTION DES FLUX DE GAZ DANS UNE PLURALITÉ DE CANAUX PNEUMATIQUES COUPLÉS ACOUSTIQUEMENT ET SON UTILISATION

(43) Veröffentlichungstag der Anmeldung: 04.08.2021
(73) Patentinhaber: Joanneum Research Forschungsgesellschaft mbH, 8010 Graz (AT)
(72) Erfinder: Graf, Franz, 8010 Graz (AT)
(74) Vertreter: Rummler, Felix

(56) Entgegenhaltungen:
- US-A- 5 207 107
- US-A1- 2005 011 278
- US-A1- 2006 107 755
- US-A1- 2007 068 225
- US-A1- 2015 059 886
- US-B1- 6 940 409

## Beschreibung

### Gebiet

Die Erfindung betrifft eine Ventilinsel, umfassend eine Vorrichtung zur Detektion von Gasströmungen in einer Mehrzahl von akustisch gekoppelten pneumatischen Kanälen.

Außerdem betrifft die Erfindung die Verwendung der Vorrichtung zur Detektion des Schließzustandes eines oder mehrerer Ventile.

### Hintergrund

In der Automatisierungstechnik werden Antriebe aller Art durch Gasströmungen in pneumatischen Kanälen betätigt. Die Gasströmungen werden durch Ventile gesteuert, die durch Steuersignale von einer Steuerungsvorrichtung kontrolliert werden. Sofern nicht besondere Sensoren eingesetzt werden, geben Ventile aber kein Feedback an die Steuerungsvorrichtung, ob das Ventil tatsächlich vollständig geöffnet, geschlossen oder teilweise geöffnet ist. Dadurch können Fehlfunktionen, wie etwa eine Leckage eines undichten Ventils oder ein unvollständiger Öffnungsvorgang, nur mit besonderem Aufwand detektiert werden.

Im Stand der Technik sind folgende Vorrichtungen zur Detektion von Strömungen in pneumatischen Systemen bekannt:
Aus US 9695956 B2 ist ein Verfahren zur Diagnose eines Ventilzustandes bekannt, das die spektrale Auswertung von Ventilvibrationen umfasst. Hierzu werden die Position eines beweglichen Teils eines Ventils und darauf wirkende mechanische Kräfte gemessen und Vibrationen durch Spektralanalyse detektiert.

EP 3546763 A1 zeigt ein Ventilsystem mit einer Druckerfassungseinheit und einer Schallerfassungseinheit. Körper- und Luftschall werden innerhalb eines Ventils erfasst, um den Zeitpunkt eines Schließvorgangs des Ventils sowie gegebenenfalls eine Leckage zu erfassen. Ferner zeigt die EP 3546763 A1 auch die Auswertung der erfassten Daten mit Hilfe des Frequenzspektrums.

EP 3421853 A1 zeigt ein Vakuumventil mit einem akustischen Sensor, der den Bewegungsschall einer oder mehrerer Ventilkomponenten detektiert.

EP 1499825 B1 offenbart ein Diagnosesystem für ein Ventil mit einem Aufnehmer für Körperschall. Das Diagnosesystem ist dazu ausgebildet, eine Leckage des Ventils im geschlossenen Zustand durch Messung des durch die Leckage erzeugten Luftstroms zu detektieren.

Die beschriebenen Verfahren zur Detektion von Leckage in Ventilen sind durch die Messgenauigkeit des von der Vorrichtung erzeugten Körperschalls beschränkt. Diese Signale sind im Allgemeinen breitbandig und durch Störsignale anderer Schallquellen im System überlagert. Dies erschwert die Detektion. Außerdem macht es die Existenz einer Vielzahl von Schallquellen schwierig, jeweils ein Signal einer Quelle zuzuordnen. Ergänzende Messungen mit Hilfe weiterer Sensoren (Kraft-, Positions- und Drucksensoren) sind mit zusätzlichen Kosten verbunden.

US 2006/107755 A1 beschreibt ein Verfahren zur Messung von Strömungsparametern in strömenden Gasen, wobei das Verfahren die folgenden Schritte umfasst: Anordnung eines Mittels zur strömungsinduzierten Schallerzeugung im Bereich der zu messenden Strömung, Messung der Frequenz und/oder des Pegels des während der zu messenden Strömung erzeugten Schalles als akustische Parameter, und Ermittlung der zu messenden Strömungsparameter durch Verarbeitung der gemessenen akustischen Parameter.

US 6 940 409 B1 beschreibt ein Verfahren zur Überwachung des Flüssigkeitsflusses in einem Rohr oder an einem Ausgang des Rohrs und zur Erkennung eines Fehlers. Das System umfasst einen akustischen Generator, der durch die im Rohr oder am Ausgang des Rohrs fließende Flüssigkeit aktiviert wird. Der Akustikgenerator sendet ein akustisches Signal, das eine charakteristische Signatur haben kann, durch die im Rohr fließende Flüssigkeit. Das akustische Signal wird von einem entfernten, vorgeschalteten akustischen Empfänger empfangen und in ein elektrisches Signal umgewandelt, das einem Signalprozessor zugeführt wird.

US 2015/059886 A1 beschreibt eine Vorrichtung zum Erkennen und Überwachen von Kavitation in Flüssigkeit, die durch einen Strömungswächter fließt, die Vorrichtung umfassend einen Körperschallaufnehmer, der dazu angeordnet ist, um akustische Signale zu erfassen, die von der Flüssigkeit, die durch einen Durchflussweg fließt, erzeugt werden und akustische Informationen zu liefern.

US 5 207 107 A beschreibt ein Verfahren zum Messen eines Massendurchflusses einer Flüssigkeitsströmung in einer Zweiphasen-Gas/Flüssigkeits-Injektionsdüse.

US 2005/011278 A1 beschreibt ein Diagnosegerät zur Verwendung in einem Durchflussmesser und mit einem akustischen Durchflussmesser.

US 2007/068225 A1 beschreibt ein System zur Detektion eines Lecks durch ein geschlossenes Ventil auf Basis einer gemessenen akustischen Signatur

Die Erfindung macht es sich zur Aufgabe, eine verbesserte Vorrichtung zur Detektion von Gasströmungen bereitzustellen.

### Kurzbeschreibung der Erfindung

Diese Aufgabe wird durch die in den unabhängigen Ansprüchen angegebene Erfindung gelöst. Vorteilhafte Ausgestaltungen sind den abhängigen Ansprüchen zu entnehmen.

Hierin beschriebene Vorrichtungen, Beispiele, Anwendungen oder Aspekte, die von den Ansprüchen abweichen, sollen lediglich dem besseren Verständnis der vorliegenden Erfindung oder bestimmter Merkmale der vorliegenden Erfindung dienen.

Gemäß einem Beispiel, das nicht Teil der beanspruchten Erfindung ist, ist eine Vorrichtung zur Detektion einer Gasströmung in einem pneumatischen Kanal beschrieben, die Vorrichtung umfassend: ein schwingungsfähiges im Kanal angeordnetes Element zur Erzeugung einer Schallwelle in Abhängigkeit einer Geschwindigkeit der Gasströmung in dem Kanal; und einen Sensor zur Detektion der Schallwelle.

Insbesondere ist eine Vorrichtung beschrieben, bei der mittels eines in dem Kanal, durch den sich die Strömung in einem zumindest teilweisen Offenzustand eines Ventils bewegt, angeordneten schwingungsfähigen Elementes eine Schallwelle erzeugt wird. Das schwingungsfähige Element ist so in dem Kanal angeordnet, dass es durch die Gasströmung zu Schwingungen angeregt wird. Die Anregung kann auch durch ein Fluid geschehen. Dabei kann das schwingungsfähige Element in oder an dem Kanal bzw. in oder an einem Ventil so befestigt sein, dass der durch die Anregung erzeugte Schall in eine Kanalwandung und/ oder in einen Teil des Ventils eingeleitet wird. Dadurch kann die Kanalwandung oder das Ventil selbst den erzeugten Schall weiterleiten. Die Kanalwandungen und/oder das Ventil können hierzu aus einem Material mit guten schallleitenden Eigenschaften bestehen. Durch den Sensor, der ein Körperschallsensor sein kann, kann der von dem schwingungsfähigen Element erzeugte Schall detektiert werden. Dazu kann der Sensor mit dem schwingungsfähigen Element bspw. über die Kanalwandung akustisch gekoppelt sein. Das schwingungsfähige Element kann so ausgestaltet sein, dass bei Anregung durch den Gasstrom oder Volumenstrom eine bestimmte, gut detektierbare Schallfrequenz erzeugt wird. Mit anderen Worten kann die Eigenfrequenz des schwingungsfähigen Elementes vorbestimmbar, bzw. das schwingungsfähige Element kann stimmbar sein.

Dadurch wird ermöglicht, gezielt akustische Signale zu erzeugen, die sich gut detektieren lassen. Insbesondere kann die Eigenfrequenz der Schallwelle im Frequenzspektrum weit entfernt von den Frequenzen von Störgeräuschen im System gewählt werden. Dadurch kann auf die Verwendung weiterer Sensoren, insbesondere von Drucksensoren verzichtet werden. Dadurch werden die Komplexität und die Kosten des Aufbaus verringert.

In einer Ausgestaltung des Beispiels ist der Sensor dazu ausgebildet, eine Amplitude der Schallwelle zu detektieren. Die Amplitude kann entweder im Zeitsignal bestimmt werden, oder es kann zunächst das Frequenzspektrum ermittelt und die Amplitude in einem bestimmten Frequenzband bestimmt werden. Da die Amplitude der Schallwelle, die von dem schwingungsfähigen Element erzeugt wird, mit der Strömungsgeschwindigkeit zusammenhängt, kann die Amplitudenmessung mit der Strömungsgeschwindigkeit kalibriert werden. Dies ermöglicht die Herstellung eines eineindeutigen Zusammenhangs zwischen der Amplitude der erzeugten Schallwelle und der Strömungsgeschwindigkeit. Dadurch können beispielsweise Leckageströme, oder teilweise Offen-/Schließzustände eines Ventils detektiert werden. Mit anderen Worten gibt die Amplitude Aufschluss darüber wie groß ein Massenstrom in dem Kanal ist. Die Größe des Massenstroms kann wiederum ein Maß für eine Offenstellung eines Ventils sein.

In einer Ausgestaltung des Beispiels ist der Sensor dazu ausgebildet, ein elektrisches Ausgangssignal auszugeben. Im Gegensatz zu einem anderen Ausgangssignal, etwa einer optischen Anzeige, ist ein elektrisches Ausgangssignal elektronisch verarbeitbar. Das Ausgangssignal ist dadurch einer elektronischen Steuerungsvorrichtung zuführbar. Die Steuerungsvorrichtung kann daher dazu eingesetzt werden einen Schließ- oder Offenzustand eines Ventils zu überwachen und ggf. zu steuern.

In einer Ausgestaltung des Beispiels ist das Ausgangssignal von einem Schwellwert der Amplitude abhängig. Ein wählbarer Schwellwert erlaubt es festzustellen, ob die Strömung eine gewisse Mindestgeschwindigkeit (Sollwert) erreicht hat. Damit kann die Funktionstüchtigkeit eines Bauteils im pneumatischen Kanal, insbesondere des Ventils, überprüft werden. Insbesondere können verschiedene Strömungsgeschwindigkeiten verschiedenen Schließzuständen zugeordnet werden. Unterhalb eines bestimmten Schwellwertes der Amplitude und damit der Strömungsgeschwindigkeit kann daher ein Gasstrom beispielsweise als Leckage erkannt werden. Ferner können durch die Einführung eines Schwellwertes Störgeräusche erkannt werden. Beispielsweise kann es sein, dass das schwingungsfähige Element durch externe Vibrationen zu Schwingungen angeregt wird, wenn die Vorrichtung beispielsweise in einem Fahrzeug verbaut ist. Durch das Kriterium des Schwellwertes können Anregungen des schwingungsfähigen Elementes unberücksichtigt bleiben, die nicht durch den Gasstrom/Volumenstrom zustande kommen. Dadurch können Fehldetektionen vermieden werden. Alternativ kann der Schwellwert so definiert werden, dass er nur überschritten wird, wenn das Ventil vollständig geöffnet ist. Dadurch kann überprüft werden, ob die Strömungsgeschwindigkeit einen vorab definierten Mindestwert erreicht. Ein solcher Mindestwert kann dazu dienen, die Funktionstüchtigkeit eines pneumatischen Systems zu prüfen, in die die Vorrichtung verbaut ist und gegebenenfalls der Fehlersuche dienen.

In einer Ausgestaltung des Beispiels überschreitet eine Grundfrequenz der Schallwelle 20 kHz (Kilohertz). Als Grundfrequenz wird die tiefste Frequenz des von dem schwingungsfähigen Element erzeugten Frequenzgemisches bezeichnet. Der erzeugte Schall kann somit vom Menschen nicht auditiv wahrgenommen werden und trägt damit nicht zum hörbaren Geräusch der Vorrichtung bei. Dies ist insbesondere aus Arbeitsschutzgründen vorteilhaft.

Gemäß der Erfindung ist eine Vorrichtung zur Detektion von Gasströmungen in einer Mehrzahl von akustisch gekoppelten pneumatischen Kanälen beschrieben, die Vorrichtung umfassend: je ein schwingungsfähiges Element zur Erzeugung einer Schallwelle in Abhängigkeit von einer Geschwindigkeit der Gasströmung in jedem Kanal der Mehrzahl von Kanälen, wobei die Elemente dazu ausgebildet sind, Schallwellen mit jeweils unterschiedlicher Frequenz zu erzeugen; und einen Sensor zur Detektion der Schallwellen, der dazu ausgebildet ist, für jede der Frequenzen ein zugehöriges Ausgabesignal zu erzeugen.

Jeder Kanal ist mit einem schwingungsfähigen Element versehen. Die Elemente sind jeweils verschieden gestimmt, sodass bei Anregung durch Gasströmungen unterschiedliche Eigenfrequenzen erzeugt werden. Jede Frequenz kann deshalb eindeutig einem Kanal zugeordnet werden. Dadurch, dass die Kanäle akustisch miteinander gekoppelt sind, kann der von allen schwingungsfähigen Elementen erzeugte Schall durch einen einzigen Sensor aufgenommen werden. Der Sensor detektiert die unterschiedlichen Frequenzen und erzeugt Ausgangssignale, von denen jedes eindeutig einer Frequenz und damit einem Kanal zugeordnet ist. Die Kanäle sind damit anhand der durch den Sensor aufgenommenen Frequenzen unterscheidbar. Dadurch sind mit einem einzigen Sensor die Schließ- /Offenzustände von einer Vielzahl von Kanälen detektierbar. Durch die Verwendung eines einzigen Sensors zur Detektion der Gasströmungen in einer Vielzahl von Kanälen werden Kosten gespart und die Komplexität des Aufbaus reduziert.

In einer Ausgestaltung der Erfindung umfasst der Sensor einen Schallwandler und eine elektronische Auswertungsvorrichtung. Durch den zweiteiligen Aufbau kann der Schallwandler in eine Baugruppe integriert werden, die den Kanal umfasst. Diese Baugruppe kann dadurch platzsparend ausgestaltet sein, dass sie die elektronische Auswertungsvorrichtung nicht umfasst. Die Auswertungsvorrichtung kann woanders angeordnet und vorhandener Platz flexibel genutzt werden. Des Weiteren kann auch anderweitig genutzte Rechner-Hardware verwendet werden. Die Auswertungsvorrichtung kann ganz oder teilweise in Software implementiert sein. Dadurch können Kosten gespart und die Auswertung bei Bedarf verändert werden.

Das schwingungsfähige Element ist ein Blatt, eine Zunge oder eine Saite. Blätter, Zungen und Saiten sind als schwingungsfähige Elemente aus Musikinstrumenten, insbesondere Holzblas- und Tasteninstrumenten, bekannt. Sie sind insbesondere stimmbar, bzw. die Eigenfrequenzen der Elemente sind durch Form und Material festgelegt und können beim Bau der Vorrichtung entsprechend gewählt werden. Dadurch kann beispielsweise auch die Grundfrequenz der schwingungsfähigen Elemente so gewählt werden, dass sie im Frequenzraum nicht mit Frequenzen übereinstimmt, an denen Schall aus Störquellen besonders hohe Amplituden erreicht. Dadurch ist die Detektion dieser Schallwellen weniger anfällig für Störungen und es können bereits Schallwellen mit geringen Amplituden zuverlässig detektiert werden.

Alle Ausgestaltungen des Beispiels sind auf die Erfindung und die weiteren untenstehenden Aspekte übertragbar.

In der Erfindung ist weiterhin eine Ventilinsel geschaffen, umfassend eine der vorstehend beschriebenen Vorrichtungen. Ventilinseln sind in der Pneumatik bekannte Vorrichtungen, in denen eine Mehrzahl von Ventilen an einem Ort zusammengefasst wird. Dadurch können Luftversorgung, elektrische Versorgung und Steuersignale von einer Steuereinrichtung für alle Ventile durch gemeinsame Leitungen material- und platzsparend erfolgen. Die Ventilinsel liefert zusätzlich eine Rückmeldung an die Steuereinrichtung, ob ein Ventil in Reaktion auf ein Steuersignal den angeforderten Schaltvorgang tatsächlich ausgeführt hat oder nicht, nämlich durch Frequenzdetektion.

Insbesondere sind die Vorrichtung nach dem Beispiel zur Detektion eines Schließzustandes eines Ventils verwendbar, und die Vorrichtung nach der Erfindung zur Detektion eines Schließzustandes eines oder mehrerer Ventile in einer Ventilinsel verwendbar. Ventile, insbesondere Magnetventile, liefern im Allgemeinen keine Rückmeldung an die Steuereinrichtung, ob ein Ventil in Reaktion auf ein Steuersignal den angeforderten Schaltvorgang tatsächlich ausgeführt hat oder nicht. Vorrichtungen gemäß der Erfindung können Gasströmungen in den Kanälen detektieren und somit einen Rückschluss auf einen Schaltvorgang eines Ventils zulassen.

### Kurzbeschreibung der Zeichnungen

Nachfolgend sind beispielhafte Ausführungsformen der Erfindung anhand der beigefügten Zeichnungen näher beschrieben. Es zeigt:
die Figur 1 eine beispielhafte Vorrichtung zur Detektion einer Strömung in einem pneumatischen Kanal;
die Figur 2 eine Ventilinsel gemäß der Erfindung;
die Figur 3 eine schematische Darstellung eines beispielhaften Sensors gemäß einer Ausgestaltung der Erfindung.

### Figurenbeschreibung

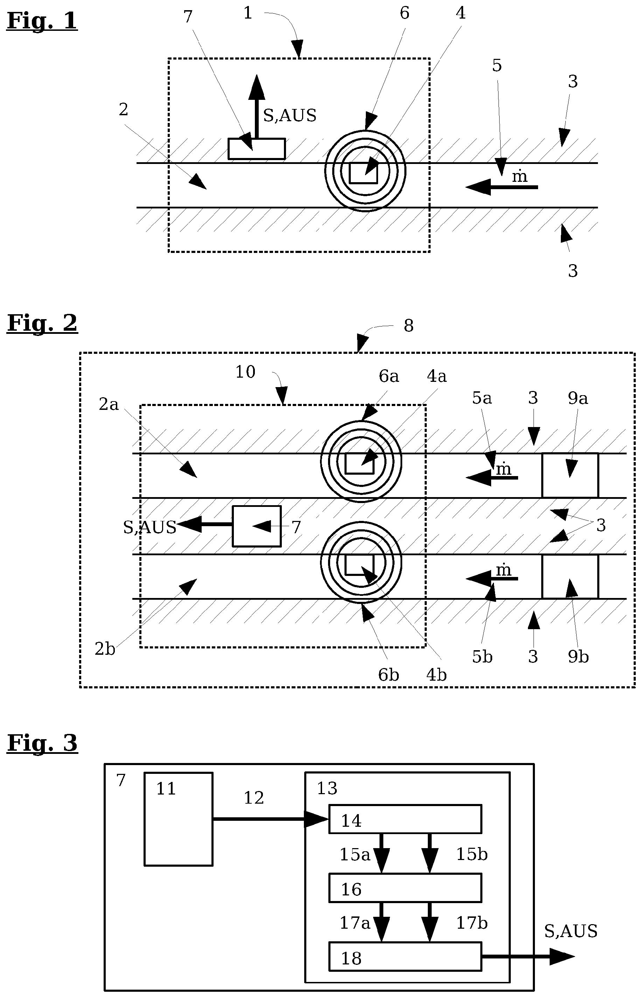

**Figur 1** zeigt eine beispielhafte Vorrichtung 1 zur Detektion einer Gasströmung. Ein pneumatischer Kanal 2 weist eine Kanalwandung 3 aus einem festen (starren oder flexiblen) Material auf. Ein schwingungsfähiges Element 4 ist an der Kanalwandung 3 befestigt und in einer Gasströmung 5 im Kanal 2 angeordnet. Das schwingungsfähige Element 4 wird durch die Gasströmung 5 zu Schwingungen angeregt und erzeugt eine Schallwelle 6, deren Amplitude von einer Geschwindigkeit der Gasströmung 5 abhängt. Die Schallwelle 6 wird durch das Gas und die als Schallleiter wirkende Kanalwandung 3 weitergeleitet. Die Vorrichtung 1 umfasst ferner einen Sensor 7, der akustisch mit der Kanalwandung 3 gekoppelt ist. Der Sensor 7 nimmt den Körperschall aus der Kanalwandung 3 auf und erzeugt in Abhängigkeit der Schallwelle 6 ein Ausgangssignal S,AUS.

**Figur 2** zeigt eine beispielhafte Ventilinsel 8 gemäß der Erfindung. In einer Mehrzahl von Kanälen 2a, 2b wird eine Mehrzahl von Gasströmungen 5a, 5b durch eine Mehrzahl von Ventilen 9a, 9b gesteuert. Die Gasströmungen 5a, 5b werden durch eine Vorrichtung 10 detektiert, die eine Mehrzahl von schwingungsfähigen Elementen 4a, 4b und einen Sensor 7 umfasst, der ein Ausgangssignal S,AUS erzeugt.

Die schwingungsfähigen Elemente 4a, 4b erzeugen bei Anregung durch die Gasströme 5a, 5b eine Mehrzahl von Schallwellen 6a, 6b, die durch die Gasströmungen 5a, 5b und die Kanalwandungen 3 weitergeleitet werden.

Der Sensor 7 ist mit den Kanalwandungen 3 aller Kanäle 2a, 2b akustisch gekoppelt und misst den Schall aus den Kanälen 2a, 2b.

**Figur 3** zeigt eine schematische Darstellung des Sensors 7. Der Sensor 7 umfasst einen Schallwandler 11. Der Schallwandler 11 wandelt die Schallwelle 6 oder die Mehrzahl von Schallwellen 6a, 6b in ein elektrisches Signal 12 um. Der Sensor 7 umfasst ferner eine Auswertungsvorrichtung 13. Das elektrische Signal 12 wird durch die Auswertungsvorrichtung 13 ausgewertet, die eine Vorrichtung zur Frequenzselektion 14, eine Vorrichtung zur Amplitudendetektion 16 und eine Vorrichtung zur Schwellwertdetektion 18 umfasst.

Die Vorrichtung zur Frequenzselektion 14 filtert durch Spektralanalyse eine Frequenz oder eine Mehrzahl von Frequenzen aus dem elektrischen Signal 12 heraus, wobei das elektrische Signal 12 ein von dem Sensor 7 aufgenommenes akustisches Signal (also die Schallwelle oder die mehreren Schallwellen die von dem schwingungsfähigen Element erzeugt werden) repräsentiert. Die herauszufilternden Frequenzen sind so gewählt, dass sie den Eigenfrequenzen der schwingungsfähigen Elemente 4, 4a, 4b entsprechen. Die Vorrichtung zur Frequenzselektion 14 gibt für jede Frequenz ein Ausgangssignal 15a, 15b heraus, das nur von Schallwellen dieser Frequenz abhängt. Jedes Ausgangssignal 15a, 15b ist dadurch eindeutig einem pneumatischen Kanal 2a, 2b zugeordnet. Die Vorrichtung zur Amplitudendetektion 16 bestimmt anschließend für jedes dieser Ausgangssignale 15a, 15b eine Amplitude 17a, 17b und gibt diese an die Vorrichtung zur Schwellwertdetektion 18 aus. Die Vorrichtung zur Schwellwertdetektion 18 bestimmt, wiederum für jede dieser Amplituden 17a, 17b, ob diese einen Schwellwert überschreitet. Die Schwellwerte sind so wählbar, dass sie eine Aussage über die Funktion der den jeweiligen Kanal regelnden Ventile ermöglichen. Die Vorrichtung zur Schwellwertdetektion 18 gibt ein Ausgangssignal S,AUS aus, das für jeden pneumatischen Kanal 2, 2a, 2b eine Information beinhaltet, ob der jeweilige Schwellwert überschritten wurde. Das Ausgangssignal S,AUS ist an eine Steuerungsvorrichtung (nicht dargestellt) für die Ventile 9, 9a, 9b übertragbar und von dieser auswertbar.

### Bezugszeichenliste

- 1: Vorrichtung zur Detektion einer Gasströmung
- 2, 2a, 2b: Pneumatischer Kanal
- 3: Kanalwandung(en)
- 4, 4a, 4b: schwingungsfähiges Element
- 5, 5a, 5b: Gasströmung(en)
- 6, 6a, 6b: Schallwelle(n)
- 7: Sensor
- 8: Ventilinsel
- 9, 9a, 9b: Ventil(e)
- 10: Vorrichtung zur Detektion einer Mehrzahl von Gasströmungen
- 11: Schallwandler
- 12: Elektrisches Signal
- 13: Auswertungsvorrichtung
- 14: Vorrichtung zur Frequenzselektion
- 15a, 15b: Ausgangssignale der Frequenzselektion
- 16: Vorrichtung zur Amplitudendetektion
- 17a, 17b: Ausgangssignale der Amplitudendetektion
- 18: Vorrichtung zur Schwellwertdetektion
- S,AUS: Ausgangssignal, vom Sensor 7 ausgegeben

## Patentansprüche

1. Ventilinsel (8), umfassend eine Mehrzahl von akustisch gekoppelten pneumatischen Kanälen (2a, 2b) und eine Vorrichtung (10) zur Detektion von Gasströmungen (5a, 5b) in der Mehrzahl von akustisch gekoppelten pneumatischen Kanälen (2a, 2b), wobei jeder Kanal der Mehrzahl von Kanälen ein Ventil (9) aufweist, durch das die Gasströmung in dem jeweiligen Kanal steuerbar ist, wobei die Vorrichtung (10) eingerichtet ist, die Gasströme in der Mehrzahl von akustisch gekoppelten pneumatischen Kanälen (2a, 2b) zu detektieren, und wobei die Vorrichtung Folgendes umfasst:
je ein schwingungsfähiges Element (4a, 4b) zur Erzeugung einer Schallwelle (6a, 6b) in Abhängigkeit von einer Geschwindigkeit der Gasströmung (5a, 5b) in jedem Kanal (2a,2b) der Mehrzahl von Kanälen, wobei jedes schwingungsfähige Element (4, 4a, 4b) ein Blatt, eine Zunge oder eine Saite ist und die schwingungsfähigen Elemente (4a, 4b) jeweils verschieden gestimmt sind, sodass bei Anregung durch Gasströmungen unterschiedliche Eigenfrequenzen erzeugt werden, und die schwingungsfähigen Elemente (4a, 4b) somit dazu ausgebildet sind, Schallwellen (6a, 6b) mit jeweils unterschiedlicher Frequenz zu erzeugen; und
einen Sensor (7) zur Detektion der Schallwellen (6a, 6b), der dazu ausgebildet ist, für jede der Frequenzen ein zugehöriges Ausgabesignal (8) zu erzeugen.

2. Ventilinsel (8) nach Anspruch 1, wobei der Sensor (7) dazu ausgebildet ist, Amplituden der Schallwellen zu detektieren.

3. Ventilinsel (8) nach Anspruch 1 oder 2, wobei der Sensor (7) dazu ausgebildet ist, ein elektrisches Ausgangssignal auszugeben.

4. Ventilinsel (8) nach einem der Ansprüche 1-3, wobei der Sensor (7) so ausgebildet ist, dass eines oder mehrere der Ausgangssignale von einem oder mehreren jeweiligen Schwellwerten der Amplitude abhängig sind.

5. Ventilinsel (8) nach einem der Ansprüche 1-4, wobei die schwingungsfähigen Elemente (4a, 4b) so ausgebildet sind, dass eine Grundfrequenz jeder einzelnen erzeugten Schallwelle (6, 6a, 6b) 20 Kilohertz überschreitet.

6. Ventilinsel (8) nach einem der Ansprüche 1-5, wobei der Sensor (7) einen Schallwandler (11) und eine elektronische Auswertungsvorrichtung (13) umfasst.

7. Verwendung der Ventilinsel (8) nach einem der vorhergehenden Ansprüche zur Detektion eines jeweiligen Schließzustandes der Ventile (9).

## Claims

1. Valve cluster (8), comprising a plurality of acoustically coupled pneumatic channels (2a, 2b) and an apparatus (10) for detecting gas flows (5a, 5b) in the plurality of acoustically coupled pneumatic channels (2a, 2b), wherein each channel of the plurality of channels has a valve (9), by means of which the gas flow in the respective channel can be controlled, wherein the apparatus (10) is adapted to detect the gas flows in the plurality of acoustically coupled pneumatic channels (2a, 2b), and wherein the apparatus comprises:
in each case an oscillatory element (4a, 4b) for generating a sound wave (6a, 6b) in dependence upon a rate of the gas flow (5a, 5b) in each channel (2a, 2b) of the plurality of channels, wherein each oscillatory element (4, 4a, 4b) is a blade, a tongue or a string and the oscillatory elements (4a, 4b) are each tuned differently such that, upon excitation by gas flows, different natural frequencies are generated, and the oscillatory elements (4a, 4b) are thus designed to generate sound waves (6a, 6b) having in each case a different frequency; and
a sensor (7) for detecting the sound waves (6a, 6b) which is designed to generate an associated output signal (8) for each of the frequencies.

2. Valve cluster (8) as claimed in claim 1, wherein the sensor (7) is designed to detect amplitudes of the sound waves.

3. Valve cluster (8) as claimed in claim 1 or 2, wherein the sensor (7) is designed to output an electrical output signal.

4. Valve cluster (8) as claimed in any one of claims 1-3, wherein the sensor (7) is designed in such a manner that one or more of the output signals are dependent upon one or more respective threshold values of the amplitudes.

5. Valve cluster (8) as claimed in any one of claims 1-4, wherein the oscillatory elements (4a, 4b) are designed in such a manner that a fundamental frequency of each individual generated sound wave (6, 6a, 6b) exceeds 20 kilohertz.

6. Valve cluster (8) as claimed in any one of claims 1-5, wherein the sensor (7) comprises a sound converter (11) and an electronic evaluation apparatus (13).

7. Use of the valve cluster (8) as claimed in any one of the preceding claims for detecting a respective closed state of the valves (9).

## Revendications

1. Îlot de valves (8), comprenant une pluralité de canaux pneumatiques acoustiquement couplés (2a, 2b) et un dispositif (10) de détection d'écoulements gazeux (5a, 5b) dans la pluralité de canaux pneumatiques acoustiquement couplés (2a, 2b), dans lequel chaque canal de la pluralité de canaux comporte une valve (9) par laquelle l'écoulement gazeux peut être commandé dans le canal respectif, dans lequel le dispositif (10) est configuré de façon à détecter les écoulements gazeux dans la pluralité de canaux pneumatiques acoustiquement couplés (2a, 2b), et dans lequel le dispositif comprend ce qui suit :
un élément oscillant respectif (4a, 4b) destiné à générer une onde sonore (6a, 6b) en fonction d'une vitesse de l'écoulement gazeux (5a, 5b) dans chaque canal (2a, 2b) de la pluralité de canaux, dans lequel chaque élément oscillant (4, 4a, 4b) est une lame, une anche ou une corde et les éléments oscillants (4a, 4b) sont respectivement accordés différemment, de sorte que lors de l'excitation par les écoulements gazeux différents fréquences propres sont générées et les éléments oscillants (4a, 4b) sont ainsi réalisés de façon à générer des ondes sonores (6a, 6b) de fréquences respectives différents ; et
un capteur (7) destiné à la détection des ondes sonores (6a, 6b), lequel est réalisé de façon à générer pour chacune des fréquences un signal de sortie (8) associé.

2. Îlot de valves (8) selon la revendication 1, dans lequel le capteur (7) est réalisé de façon à détecter les amplitudes des ondes sonores.

3. Îlot de valves (8) selon la revendication 1 ou 2, dans lequel le capteur (7) est réalisé de façon à créer un signal de sortie électrique.

4. Îlot de valves (8) selon l'une quelconque des revendications 1-3, dans lequel le capteur (7) est réalisé de sorte qu'un ou plusieurs des signaux de sortie dépendent d'une ou plusieurs valeurs seuils respectives de l'amplitude.

5. Îlot de valves (8) selon l'une quelconque des revendications 1-4, dans lequel les éléments oscillants (4a, 4b) sont réalisés de sorte qu'une fréquence fondamentale de chaque onde sonore (6, 6a, 6b) individuelle générée dépasse 20 kilohertz.

6. Îlot de valves (8) selon l'une quelconque des revendications 1-5, dans lequel le capteur (7) comprend un transducteur (11) et un dispositif d'analyse électronique (13).

7. Utilisation de l'îlot de valves (8) selon l'une quelconque des revendications précédentes afin de détecter un état de fermeture respectif des valves (9).
